# EUROPEAN PATENT APPLICATION

(11) **EP 2 369 490 A1**
(43) Date of publication of application: **28.09.2011**
(21) Application number: 10193090.7
(22) Date of filing: 30.11.2010
(51) Int. Cl.: G06F 13/40

(54) **Switching control system**

(30) Priority: 30.11.2009 JP 2009271083
(71) Applicant: Funai Electric Co., Ltd., Daito-shi, Osaka 574-0013 (JP)
(72) Inventor: Iwamoto, Atsushi, Daito-shi Osaka 574-0013 (JP)
(74) Representative: Grünecker, Kinkeldey, Stockmair & Schwanhäusser Anwaltssozietät

(57) **Abstract**

In this switching control system (1, 100, 200), a first control portion (11, 111, 211, 311) is preferentially connected to a portable storage medium connection portion (31, 131, 133, 231), and formed to control a switching portion to switch the connection target of the portable storage medium connection portion from the first control portion to a second control portion (21, 121, 221, 321) in response to the contents of data stored in a portable storage medium (50) when the portable storage medium is connected to the portable storage medium connection portion.

## Description

### BACKGROUND OF THE INVENTION

### Field of the Invention

The present invention relates to a switching control system, and more particularly, it relates to a switching control system including a portable storage medium connection portion connectable with a portable storage medium.

### Description of the Background Art

A switching control system including a portable storage medium connection portion connectable with a portable storage medium is known in general, as disclosed in Japanese Patent Laying-Open No. 2004-86330, for example.

The aforementioned Japanese Patent Laying-Open No. 2004-86330 discloses a switching control system including a system A, a system B having a shorter starting time than the system A and a card slot (portable storage medium connection portion) connected with either the system A or the system B so that the connection target is switchable, and capable of receiving a PC card (portable storage medium). The switching control system according to the aforementioned Japanese Patent Laying-Open No. 2004-86330 is so formed that the system B is started in preference to the system A and the card slot and the system B are connected with each other when the system B is started. Further, the switching control system according to the aforementioned Japanese Patent Laying-Open No. 2004-86330 is formed to switch the connection target of the card slot from the system B to the system A when the user issues an instruction for switching from the system B to the system A.

If the PC card stores data unprocessable with the system B (data processable with the system A), however, the switching control system according to the aforementioned Japanese Patent Laying-Open No. 2004-86330 cannot switch the connection target of the card slot from the system B to the system A unless the user issues the switching instruction. Therefore, the user must invariably grasp whether the data stored in the PC card is processable with the system A or with the system B, and hence a burden on the user is disadvantageously increased. In other words, the switching control system according to the aforementioned Japanese Patent Laying-Open No. 2004-86330 has such a problem that the burden on the user is increased when the card slot (portable storage medium connection portion) is shared by a plurality of systems (control portions).

### SUMMARY OF THE INVENTION

The present invention has been proposed in order to solve the aforementioned problem, and an object of the present invention is to provide a switching control system capable of reducing a burden on the user when a portable storage medium connection portion is shared by a plurality of control portions.

A switching control system according to an aspect of the present invention includes a portable storage medium connection portion, to which a portable storage medium is connected, capable of reading data stored in the portable storage medium, a first control portion formed to be selectively connectable with the portable storage medium connection portion, a second control portion formed to be selectively connectable with the portable storage medium connection portion and a switching portion, controlled by the first control portion, capable of switching the portable storage medium connection portion to be connected with either the first control portion or the second control portion, while the first control portion is formed to control the switching portion so that the first control portion is preferentially connected to the portable storage medium connection portion and to control the switching portion to switch the connection target of the portable storage medium connection portion from the first control portion to the second control portion in response to the contents of the data stored in the portable storage medium when the portable storage medium is connected to the portable storage medium connection portion.

In the switching control system according to the aspect, as hereinabove described, the first control portion is formed to control the switching portion so that the first control portion is preferentially connected to the portable storage medium connection portion and to control the switching portion to switch the connection target of the portable storage medium connection portion from the first control portion to the second control portion in response to the contents of the data stored in the portable storage medium when the portable storage medium is connected to the portable storage medium connection portion, whereby the switching control system can process the data stored in the portable storage medium preferentially with the first control portion and automatically switch the connection target of the portable storage medium connection portion to the second control portion in response to the contents of the data stored in the portable storage medium when the same cannot process the data with the first control portion. Thus, the user may not grasp whether the data stored in the portable storage medium is processable with the first control portion or with the second control portion also when the portable storage medium connection portion is shared by a plurality of control portions (first and second control portions), whereby a burden on him/her can be reduced.

In the aforementioned switching control system according to the aspect, the first control portion is preferably formed to detect the contents of the data stored in the portable storage medium when the portable storage medium is connected to the portable storage medium connection portion, to process the data stored in the portable storage medium when the data stored in the portable storage medium includes data processable with the first control portion, and to control the switching portion to switch the connection target of the portable storage medium connection portion from the first control portion to the second control portion when the data stored in the portable storage medium includes no data processable with the first control portion or when the first control portion terminates processing of the data stored in the portable storage medium. According to this structure, the switching control system can rapidly process the data processable with the first control portion and can also automatically process the data processable with the second control portion when the portable storage medium is connected to the portable storage medium connection portion.

In this case, the first control portion is preferably formed to determine whether or not the portable storage medium has been connected to the portable storage medium connection portion and to determine whether or not the data stored in the portable storage medium includes the data processable with the first control portion when determining that the portable storage medium has been connected to the portable storage medium connection portion. According to this structure, the first control portion, triggered by the connection of the portable storage medium to the portable storage medium connection portion, can automatically determine whether or not the data stored in the portable storage medium connected to the portable storage medium connection portion includes the data processable with the first control portion.

In the aforementioned switching control system switching the connection target of the portable storage medium connection portion from the first control portion to the second control portion with the first control portion, the second control portion is preferably formed to determine whether or not the data stored in the portable storage medium includes data processable with the second control portion when the connection target of the portable storage medium connection portion is switched from the first control portion to the second control portion and to process the data stored in the portable storage medium when the data stored in the portable storage medium includes the data processable with the second control portion. According to this structure, the second control portion can automatically process data unprocessable with the first control portion.

In this case, the second control portion is preferably formed to detect the portable storage medium connected to the portable storage medium connection portion when the connection target of the portable storage medium connection portion is switched from the first control portion to the second control portion. According to this structure, the second control portion can automatically determine whether or not the data stored in the portable storage medium includes processable data after detecting the portable storage medium, whereby the burden on the user can be further reduced.

In the aforementioned switching control system switching the connection target of the portable storage medium connection portion from the first control portion to the second control portion with the first control portion, the second control portion is preferably formed to determine whether or not the data stored in the portable storage medium includes data processable with the second control portion when the connection target of the portable storage medium connection portion is switched from the first control portion to the second control portion and to determine whether or not the user has extracted the portable storage medium from the portable storage medium connection portion when the data stored in the portable storage medium includes no data processable with the second control portion. According to this structure, the second control portion can easily grasp extraction of the portable storage medium from the portable storage medium connection portion when the user notices that the data stored in the portable storage medium is not processed and extracts the portable medium.

The aforementioned switching control system switching the connection target of the portable storage medium connection portion from the first control portion to the second control portion with the first control portion preferably further includes a third control portion formed to be selectively connectable with the portable storage medium connection portion, and the first control portion is preferably formed to control the switching portion to switch the connection target of the portable storage medium connection portion from the first control portion to the second control portion when the data stored in the portable storage medium includes data processable with the second control portion and to control the switching portion to switch the connection target of the portable storage medium connection portion from the first control portion to the third control portion when the data stored in the portable storage medium includes data processable with the third control portion. According to this structure, the first control portion can properly control the switching portion to connect the portable storage medium connection portion with the first control portion, the second control portion or the third control portion in response to the contents of the data stored in the portable storage medium.

In the aforementioned switching control system according to the aspect, the second control portion is preferably formed to determine the state of connection between the portable storage medium connection portion and the portable storage medium when the second control portion is connected with the portable storage medium connection portion and to post the first control portion about cancellation of the connection between the portable storage medium connection portion and the portable storage medium when determining that the connection between the portable storage medium connection portion and the portable storage medium has been canceled. According to this structure, the first control portion can recognize that the connection between the portable storage medium connection portion and the portable storage medium has been canceled due to the posting from the second control portion also when the first control portion is not connected with the portable storage medium connection portion.

In this case, the first control portion is preferably formed to control the switching portion to connect the portable storage medium connection portion and the first control portion with each other when the second control portion posts the first control portion about cancellation of the connection between the portable storage medium connection portion and the portable storage medium. According to this structure, the portable storage medium connection portion and the first control portion are invariably connected with each other when the connection between the portable storage medium connection portion and the portable storage medium is canceled. When the portable storage medium is connected to the portable storage medium connection portion next time, therefore, the first control portion can preferentially recognize the data stored in the connected portable storage medium.

The aforementioned switching control system according to the aspect is preferably provided with one portable storage medium connection portion. According to this structure, increase in the number of components can be suppressed as compared with a case where the switching control system is provided with a plurality of portable storage medium connection portions, i.e., that for a portable storage medium storing data processable with the first control portion and that for another portable storage medium storing data processable with the second control portion. Whichever one of the portable medium storing the data processable with the first control portion and the portable medium storing the data processable with the second control portion is connected to the portable storage medium connection portion, further, the switching control system can process the data with the first or second control portion. Therefore, the switching control system provided with only one portable storage medium connection portion can process various data stored in the portable storage medium with no problems.

In the aforementioned switching control system according to the aspect, the portable storage medium connection portion preferably includes a first portable storage medium connection portion and a second portable storage medium connection portion provided separately from the first portable storage medium connection portion, and the switching portion preferably includes a first switching portion capable of switching/connecting the first portable storage medium connection portion to either the first control portion or the second control portion and a second switching portion capable of switching/connecting the second portable storage medium connection portion to either the second control portion or the first control portion. According to this structure, the switching control system can properly process the data with the first or second control portion in response to the contents of the data stored in the portable storage medium, to whichever one of the first and second portable storage medium connection portions the portable storage medium is connected.

In the aforementioned switching control system according to the aspect, the first control portion is preferably formed to control a car navigation unit and to be capable of processing update data for the car navigation unit stored in the portable storage medium, and the second control portion is preferably formed to be capable of processing data for a unit other than the car navigation unit. According to this structure, the switching control system can, also when a portable storage medium storing data different from the update data for the car navigation unit, automatically process the data stored in the portable storage medium with the second control portion, whereby the burden on the user can be reduced.

In this case, the unit other than the car navigation unit preferably includes an audiovisual unit capable of reproducing at least either music or an image, and the second control portion is preferably formed to be capable of processing at least music data or image data for the audiovisual unit. According to this structure, a switching control system capable of properly processing at least either the music data or the image data stored in the portable storage medium can be obtained.

In the aforementioned switching control system according to the aspect, the first control portion is preferably formed to detect the portable storage medium connected to the portable storage medium connection portion when the portable storage medium is connected to the portable storage medium connection portion. According to this structure, the first control portion can automatically determine whether or not the data stored in the portable storage medium includes processable data after detecting the portable storage medium, whereby the burden on the user can be further reduced.

In the aforementioned switching control system according to the aspect, the first control portion is preferably formed to detect the portable storage medium connected to the portable storage medium connection portion and to check the data stored in the detected portable storage medium when the portable storage medium is connected to the portable storage medium connection portion. According to this structure, the first control portion can automatically determine whether or not the data stored in the portable storage medium includes at least data processable with the first control portion by checking the data stored in the portable storage medium, whereby the burden on the user can be further reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram for illustrating the structure of a car navigation system according to a first embodiment of the present invention;
Fig. 2 is a schematic diagram for detailedly illustrating the structure of an SD interface switch of the car navigation system shown in Fig. 1;
Fig. 3 is a schematic diagram for detailedly illustrating switching of the SD interface switch of the car navigation system shown in Fig. 1;
Fig. 4 is a schematic diagram for illustrating switching timing for the SD interface switch of the car navigation system shown in Fig. 1;
Fig. 5 is a flow chart for illustrating control flows in a navigation-side CPU and an AV-side CPU in switching of an SD interface switch of the car navigation system shown in Fig. 1;
Fig. 6 is a state transition diagram for illustrating state transition following switching of the SD interface switch of the car navigation system shown in Fig. 1;
Fig. 7 is a block diagram for illustrating the structure of a car navigation system according to a second embodiment of the present invention;
Fig. 8 is a schematic diagram for illustrating switching timing for an SD interface switch of the car navigation system according to the second embodiment of the present invention;
Fig. 9 is a block diagram for illustrating the structure of a car navigation system according to a third embodiment of the present invention;
Fig. 10 is a schematic diagram for illustrating switching timing for an SD interface switch of the car navigation system according to the third embodiment of the present invention;
Fig. 11 is a state transition diagram for illustrating state transition following switching of the SD interface switch of the car navigation system according to the third embodiment of the present invention;
Fig. 12 is a schematic diagram for illustrating switching timing for an SD interface of a car navigation system according to a modification of the third embodiment of the present invention; and
Fig. 13 is a state transition diagram for illustrating state transition following switching of the SD interface switch according to the modification of the third embodiment of the present invention.

### DESCRIPTION OF THE PREFERRED EMBODIMENTS

Embodiments of the present invention are now described with reference to the drawings.

### (First Embodiment)

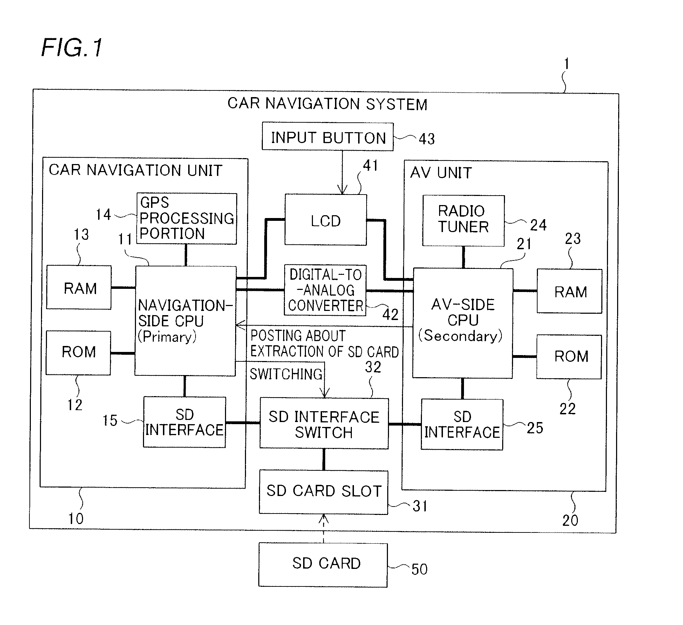

First, the structure of a car navigation system 1 according to a first embodiment of the present invention is described with reference to Figs. 1 to 4.

As shown in Fig. 1, the car navigation system 1 according to the first embodiment of the present invention includes a car navigation unit 10 mainly conducting program processing for showing the user the shortest route to his/her destination and an AV unit 20 mainly conducting program processing related to an AV (audiovisual) function consisting of audio (sound) and visual (image) functions. The car navigation system 1 is an example of the "switching control system" in the present invention. The car navigation system 1 further includes an SD card slot 31 capable of reading an SD card 50, an SD interface switch 32 capable of switching connection between the SD card slot 31 and either the car navigation unit 10 or the AV unit 20, a liquid crystal display portion (LCD) 41, a digital-to-analog converter 42 and an input button 43. The SD card slot 31 is an example of the "portable storage medium connection portion" in the present invention, and the SD interface switch 32 is an example of the "switching portion" in the present invention. The SD card 50 is an example of the "portable storage medium" in the present invention.

The car navigation unit 10 of the car navigation system 1 includes a navigation-side CPU (primary CPU) 11 controlling the car navigation unit 10, a ROM 12 and a RAM 13 connected to the navigation-side CPU 11, a GPS (global positioning system) processing portion 14 for finding the position of the car navigation system 1 and an SD interface 15 connecting the navigation-side CPU 11 and the SD interface switch 32 with each other. The navigation-side CPU 11 is an example of the "first control portion" in the present invention.

The ROM 12 stores a program for controlling the car navigation unit 10, map information and the like. The RAM 13 has a function of temporarily preserving processed data when the navigation-side CPU 11 runs the program stored in the ROM 12. The GPS processing portion 14 has a function of receiving radio waves from a plurality of GPS satellites (not shown) and operating the position of the car navigation system 1 on the basis of the received radio waves.

The AV unit 20 of the car navigation system 1 includes an AV-side CPU (secondary CPU) 21 controlling the AV unit 20 which is a system other than the car navigation unit 10, a ROM 22 and a RAM 23 connected to the AV-side CPU 21, a radio tuner 24 acquiring radiobroadcasting data and an SD interface 25 connecting the AV-side CPU 21 and the SD interface switch 32 with each other. The AV-side CPU 21 is an example of the "second control portion" in the present invention. The AV unit 20 is controlled by the AV-side CPU 21 to reproduce music and images when the SD card 50 stores compressed music data and compressed image data and to output sounds of radiobroadcasting when the radio tuner 24 is in an ON-state.

The ROM 22 stores a program for controlling the AV unit 20, reproduction data and the like. The RAM 23 has a function of temporarily preserving processed data when the AV-side CPU 21 runs the program stored in the ROM 22.

The SD card slot 31 is so formed that the SD card 50 is insertable thereinto, and formed to be capable of reading data stored in the SD card 50 when the same is inserted thereinto. The SD card slot 31 is connected with the SD interface switch 32.

The SD interface switch 32 is formed to be selectively (alternatively) switchable to the navigation-side CPU 11 of the car navigation unit 10 and the AV-side CPU 21 of the AV unit 20. More specifically, the SD interface switch 32 is connected with both of the SD interface 15 of the car navigation unit 10 and the SD interface 25 of the AV unit 20, and formed to selectively switch/connect the SD card slot 31 to either the SD interface 15 or the SD interface 25. When the SD interface switch 32 connects the SD card slot 31 and the SD interface 15 with each other, the navigation-side CPU 11 is connected with the SD card slot 31 through the SD interface 15 and the SD interface switch 32. When the SD interface switch 32 connects the SD card slot 31 and the SD interface 25 with each other, on the other hand, the AV-side CPU 21 is connected with the SD card slot 31 through the SD interface 25 and the SD interface switch 32. The SD interface switch 32 is formed to switch/connect the SD card slot 31 to either the SD interface 15 or the SD interface 25 only when receiving a switching instruction from the navigation-side CPU 11 of the car navigation unit 10.

The liquid crystal display (LCD) portion 41 is connected with the car navigation unit 10 and the AV unit 20, and has functions of displaying map information etc. of the car navigation unit 10 and reproduction information of the AV unit 20. The digital-to-analog converter 42 is connected with the car navigation unit 10 and the AV unit 20, and has a function of converting digital sound data of the car navigation unit 10 and the AV unit 20 to analog sound data and outputting the same to a speaker (not shown). The input button 43 is connected with the liquid crystal display (LCD) portion 41, and provided for allowing the user to operate the car navigation unit 10 and the AV unit 20.

According to the first embodiment, the navigation-side CPU 11 is formed to control the SD interface switch 32 to be connected to the SD interface 15 in preference to the SD interface 25. In other words, the SD interface switch 32 is connected to the SD interface 15 of the navigation-side CPU 11 when no SD card 50 is connected to (inserted into) the SD card slot 31, and connected to the SD interface 25 of the AV-side CPU 21 in a prescribed case. Thus, the SD interface 15 and the SD card slot 31 are necessarily connected with each other when the SD card 50 is connected to the SD card slot 31, whereby the navigation-side CPU 11 preferentially recognizes the contents of the data stored in the inserted SD card 50. Further, the navigation-side CPU 11 is formed to control the SD interface switch 32 to switch the connection target of the SD card slot 31 to the AV-side CPU 21 of the AV unit 20 in response to the contents of the data stored in the SD card 50.

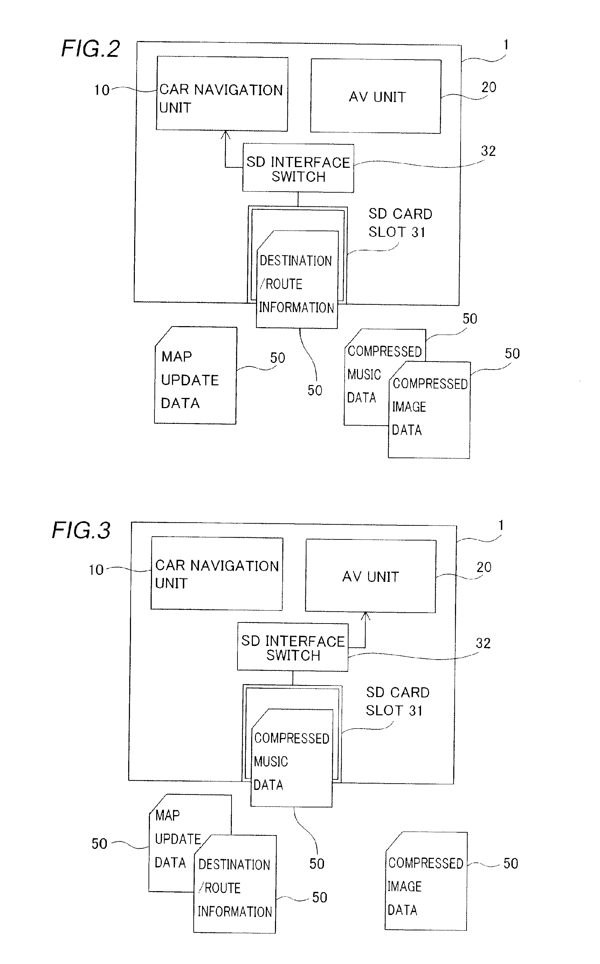

More specifically, the navigation-side CPU 11 is formed to determine whether or not the data stored in the SD card 50 connected to the SD card slot 31 includes data (update data (map update data and destination/route information) for the program stored in the ROM 12 etc.) processable with the navigation-side CPU 11. Further, the navigation-side CPU 11 is formed to process the processable data when the data stored in the SD card 50 includes the data (update data (map update data and destination/route information) etc.) processable with the navigation-side CPU 11. In addition, the navigation-side CPU 11 is formed to switch the SD card slot 31 from the state (shown in Fig. 2) connected with the SD interface 15 to a state (shown in Fig. 3) connected with the SD interface 25 when the data stored in the SD card 50 includes no data (update data etc.) processable with the navigation-side CPU 11.

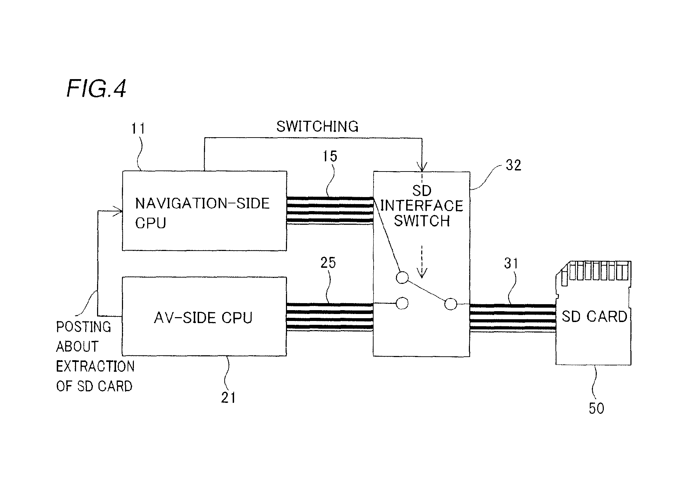

According to the first embodiment, the AV-side CPU 21 is so formed, when the SD card 50 stores AV data (compressed music data and compressed image data) processable with the AV-side CPU 21, as to process the processable AV data (compressed music data and compressed image data). Further, the AV-side CPU 21 is formed to post the navigation-side CPU 11 of the car navigation unit 10 about cancellation of the connection with the SD card 50 when the connection between the SD card slot 31 and the SD card 50 is canceled, as shown in Fig. 4.

Control flows in the navigation-side CPU 11 and the AV-side CPU 21 of the car navigation system 1 according to the first embodiment are now described with reference to Figs. 1, 5 and 6.

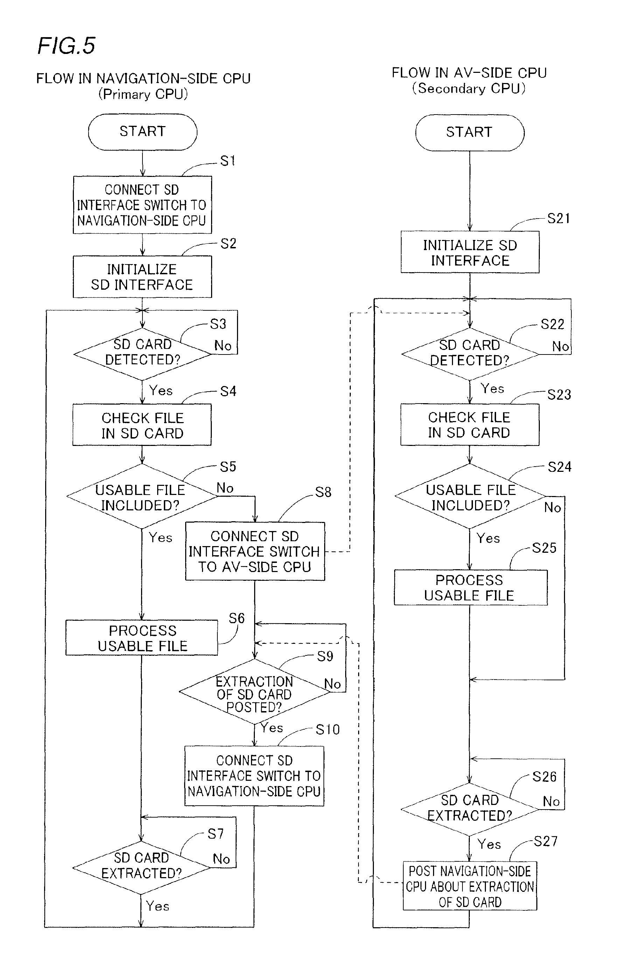

When no SD card 50 is inserted into the SD card slot 31, the navigation-side CPU 11 and the SD card slot 31 are connected with each other. In other words, the navigation-side CPU 11 (see Fig. 1) of the car navigation unit 10 connects the SD interface switch 32 to the SD interface 15 of the car navigation unit 10 at a step S1, as shown in Fig. 5. At a step S2, the navigation-side CPU 11 initializes the SD interface 15. Thus, the navigation-side CPU 11 is enabled to recognize the SD card slot 31 through the SD interface 15, and connected with the SD card slot 31.

In the AV unit 20, the AV-side CPU 21 initializes the SD interface 25 at a step S21. Thus, the AV-side CPU 21 is enabled to recognize the SD card slot 31 through the SD interface 25 when the SD interface switch 32 is switched. Thereafter the AV-side CPU 21 determines whether or not the SD card 50 has been detected at a step S22. When the SD interface switch 32 is connected to the navigation-side CPU 11, the AV-side CPU 21 cannot detect the SD card 50, as a matter of course. When the SD interface switch 32 is switched to the AV-side CPU 21 as described later, on the other hand, the navigation-side CPU 11 immediately detects the SD card 50. The AV-side CPU 21 repeats the determination at the step S22 until the SD card 50 is detected.

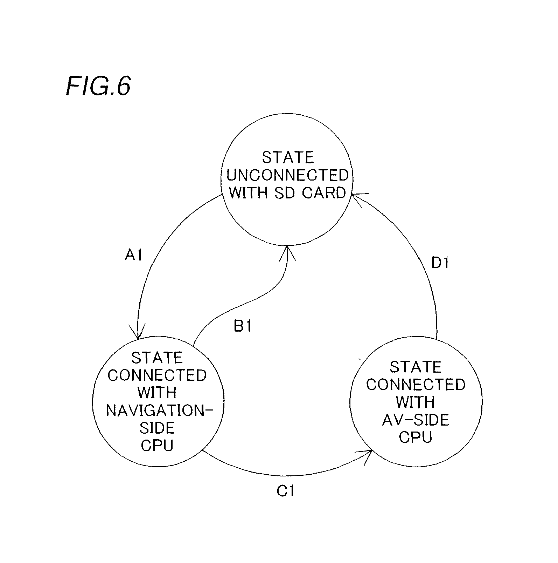

In the car navigation unit 10, the navigation-side CPU 11 determines whether or not the SD card 50 has been detected at a step S3. In other words, the navigation-side CPU 11 determines whether or not the user has inserted (connected) the SD card 50 into (to) the SD card slot 31 at the step S3. The navigation-side CPU 11 repeats the determination at the step S3 until the SD card 50 is detected. If determining that the SD card 50 has been detected at the step S3, the navigation-side CPU 11 advances to a step S4. Thus, the SD card slot 31 is shifted from a state unconnected with the SD card 50 to a state connected with the navigation-side CPU 11, as shown in Fig. 6 (see A1).

Thereafter the navigation-side CPU 11 checks a file in the SD card 50 inserted into the SD card slot 31 at the step S4, as shown in Fig. 5. In other words, the navigation-side CPU 11 checks the contents of the data stored in the SD card 50 at the step S4.

According to the first embodiment, the navigation-side CPU 11 determines whether or not the data checked by the navigation-side CPU 11 includes a file (update data (map update data and destination/route information) for the program etc.) usable in the navigation-side CPU 11 at a step S5. If determining that the data includes the file usable in the navigation-side CPU 11 at the step S5, the navigation-side CPU 11 advances to a step S6. Then, the navigation-side CPU 11 processes the usable file (update data (map update data and destination/route information) for the program etc.) at the step S6, and advances to a step S7. Thereafter the navigation-side CPU 11 determines whether or not the SD card 50 has been extracted from the SD card slot 31 at the step S7. The navigation-side CPU 11 repeats the determination at the step S7 until the SD card 50 is extracted from the SD card slot 31. If determining that the SD card 50 has been extracted from the SD card slot 31 at the step S7, the navigation-side CPU 11 returns to the step S3. In other words, the SD card slot 31 is shifted from the state connected with the navigation-side CPU 11 to the sate unconnected with the SD card 50, as shown in Fig. 6 (see B1.

If determining that the data includes no file usable in the navigation-side CPU 11 at the step S5, on the other hand, the navigation-side CPU 11 advances to a step S8, as shown in Fig. 5. Then, the navigation-side CPU 11 switches the SD interface switch 32 at the step S8. In other words, the navigation-side CPU 11 switches the connection target of the SD card slot 31 from the navigation-side CPU 11 to the AV-side CPU 21. Thus, the SD card slot 31 is connected with the AV-side CPU 21 of the AV unit 20. In other words, the SD card slot 31 is shifted from the state connected with the navigation-side CPU 11 to a state connected with the AV-side CPU 21, as shown in Fig. 6 (see Fig. C1). Thereafter the navigation-side CPU 11 determines whether or not the AV-side CPU 21 of the AV unit 20 has posted the same that the SD card 50 has been extracted from the SD card slot 50 at a step S9, as shown in Fig. 5. The navigation-side CPU 11 repeats the determination at the step S9 until the AV-side CPU 21 of the AV unit 20 posts the same that the SD card 50 has been extracted from the SD card slot 50.

The SD interface switch 32 connects the AV-side CPU 21 and the SD card slot 31 with each other on the basis of the aforementioned processing of the navigation-side CPU 11 at the step S8, whereby the AV-side CPU 21 of the AV unit 20 detects the SD card 50 at the step S22 for determining whether or not the SD card 50 has been detected.

Thereafter the AV-side CPU 21 checks a file in the SD card 50 inserted into the SD card slot 31 at a step S23. In other words, the AV-side CPU 21 checks the contents of the data stored in the SD card 50 at the step S23.

Then, the AV-side CPU 21 determines whether or not the data checked by the AV-side CPU 21 includes a file (AV data such as compressed music data and compressed image data) usable in the AV-side CPU 21 at a step S24. If determining that the data includes the file usable in the AV-side CPU 21 at the step S24, the AV-side CPU 21 advances to a step S25. Then, the AV-side CPU 21 processes the usable file (AV data such as compressed music data and compressed image data) at the step S25, and advances to a step S26. If determining that the data includes no file usable in the AV-side CPU 21 at the step S24, on the other hand, the AV-side CPU 21 advances to the step S26.

Thereafter the AV-side CPU 21 determines whether or not the SD card 50 has been extracted from the SD card slot 31 at the step S26. The AV-side CPU 21 repeats the determination at the step S26 until the SD card 50 is extracted from the SD card slot 31. If determining that the SD card 50 has been extracted from the SD card slot 31 at the step S26, the AV-side CPU 21 advances to a step S27. Then, the AV-side CPU 21 posts the navigation-side CPU 11 that the SD card 50 has been extracted from the SD card slot 31 at the step S27, and returns to the step S22.

In the car navigation unit 10, the navigation-side CPU 11 switches the SD interface switch 32 at a step S10 on the basis of the posting from the AV-side CPU 21 at the step S27. In other words, the navigation-side CPU 11 switches the connection target of the SD card slot 31 from the AV-side CPU 21 to the navigation-side CPU 11. Thus, the SD card slot 31 and the navigation-side CPU 11 of the car navigation unit 10 are connected with each other. The navigation-side CPU 11 switches the SD interface switch 32 to connect the navigation-side CPU 11 and the SD card slot 31 with each other, and returns to the step S3. In other words, the SD card slot 31 is shifted from the state connected with the AV-side CPU 21 to the state unconnected with the SD card 50, as shown in Fig. 6 (see D1).

According to the first embodiment, as hereinabove described, the navigation-side CPU 11 is formed to control the SD interface switch 32 so that the same is preferentially connected to the SD card slot 31 and to control the SD interface switch 32 to switch the connection target of the SD card slot 31 from the navigation-side CPU 11 to the AV-side CPU 21 in response to the contents of the data stored in the SD card 50 when the SD card 50 is connected to the SD card slot 31, whereby the car navigation system 1 can process the data stored in the SD card 50 preferentially with the navigation-side CPU 11 and automatically switch the connection target of the SD card slot 31 to the AV-side CPU 21 in response to the contents of the data stored in the SD card 50 when the same cannot process the data with the navigation-side CPU 11. Also when the SD card slot 31 is shared by a plurality of control portions (the navigation-side CPU 11 and the AV-side CPU 21), therefore, the user may not grasp whether the data stored in the SD card 50 is processable with the navigation-side CPU 11 or with the AV-side CPU 21, whereby a burden on him/her can be reduced.

According to the first embodiment, as hereinabove described, the navigation-side CPU 11 is formed to process the processable data when the data stored in the SD card 50 connected to the SD card slot 31 includes the processable data (map update data and destination/route information) and to switch the connection target of the SD card slot 31 from the navigation-side CPU 11 to the AV-side CPU 21 when the data stored in the SD card 50 connected to the SD card slot 31 includes no data processable with the navigation-side CPU 11, whereby the car navigation system 1 can rapidly process the data processable with the navigation-side CPU 11 and can also automatically process the data processable with the AV-side CPU 21 when the SD card 50 is connected to the SD card slot 31.

According to the first embodiment, as hereinabove described, the navigation-side CPU 11 is formed to determine whether or not the SD card 50 has been connected to the SD card slot 31 and to determine whether or not the data stored in the SD card 50 includes the data (map update data and destination/route information) processable with the navigation-side CPU 11 when determining that the SD card 50 has been connected to the SD card slot 31, whereby the navigation-side CPU 11, triggered by the connection of the SD card 50 to the SD card slot 31, can automatically determine whether or not the data stored in the SD card 50 connected to the SD card slot 31 includes the data processable with the navigation-side CPU 11 when the SD card 50 includes no data processable with the navigation-side CPU 11.

According to the first embodiment, as hereinabove described, the AV-side CPU 21 is formed to determine whether or not the data stored in the SD card 50 includes the data processable with the AV-side CPU 21 when the connection target of the SD card slot 31 is switched from the navigation-side CPU 11 to the AV-side CPU 21 and to process the data stored in the SD card 50 when the data stored in the SD card 50 includes the data processable with the AV-side CPU 21, whereby with the AV-side CPU 21 can automatically process the data unprocessable with the navigation-side CPU 11.

According to the first embodiment, as hereinabove described, the AV-side CPU 21 is formed to detect the SD card 50 connected to the SD card slot 31 when the connection target of the SD card slot 31 is switched from the navigation-side CPU 11 to the AV-side CPU 21 so that the AV-side CPU 21 can automatically determine whether or not the data stored in the SD card 50 includes the data processable with the AV-side CPU 21 after detecting the SD card 50, whereby the burden on the user can be further reduced.

According to the first embodiment, as hereinabove described, the AV-side CPU 21 is formed to determine whether or not the data stored in the SD card 50 includes the data processable with the AV-side CPU 21 when the connection target of the SD card slot 31 is switched from the navigation-side CPU 11 to the AV-side CPU 21 and to determine whether or not the user has extracted the SD card 50 from the SD card slot 31 when the data stored in the SD card 50 includes no data processable with the AV-side CPU 21, whereby the AV-side CPU 21 can easily grasp extraction of the SD card 50 from the SD card slot 31 when the user notices that the data stored in the SD card 50 is not processed and extracts the SD card 50.

According to the first embodiment, as hereinabove described, the AV-side CPU 21 is formed to determine the state of the connection between the SD card slot 31 and the SD card 50 when the SD card 50 is connected to the SD card slot 31 and to post the navigation-side CPU 11 about cancellation of the connection between the SD card slot 31 and the SD card 50 when determining that the connection between the SD card slot 31 and the SD card 50 has been canceled, whereby the navigation-side CPU 11 can recognize that the connection between the SD card slot 31 and the SD card 50 has been canceled due to the posting from the AV-side CPU 21 also when the same is not connected with the SD card slot 31.

According to the first embodiment, as hereinabove described, the navigation-side CPU 11 is formed to control the SD interface switch 32 to connect the SD card slot 31 to the navigation-side CPU 11 when the AV-side CPU 21 posts the same that the connection between the SD card slot 31 and the SD card 50 has been canceled so that the SD card slot 31 and the navigation-side CPU 11 are invariably connected with each other when the connection between the SD card slot 31 and the SD card 50 is canceled. When the SD card 50 is connected to the SD card slot 31 next time, therefore, the navigation-side CPU 11 can easily preferentially recognize the data stored in the connected SD card 50.

According to the first embodiment, as hereinabove described, the car navigation system 1 is provided with only one card slot 31, whereby increase in the number of components can be suppressed as compared with a case where the car navigation system 1 is provided with a plurality of SD card slots, i.e., that for an SD card storing data processable with the navigation-side CPU 11 and that for another SD card storing data processable with the AV-side CPU 21. Whichever one of the SD card 50 storing the data processable with the navigation-side CPU 11 and the SD card 50 storing the data processable with the AV-side CPU 21 is connected to the SD card slot 31, further, the car navigation system 1 can process the data stored in the SD card 50 with the navigation-side CPU 11 or the AV-side CPU 21. Consequently, the car navigation system 1 provided with only one SD card slot 31 can process various data stored in the SD card 50 with no problems.

### (Second Embodiment)

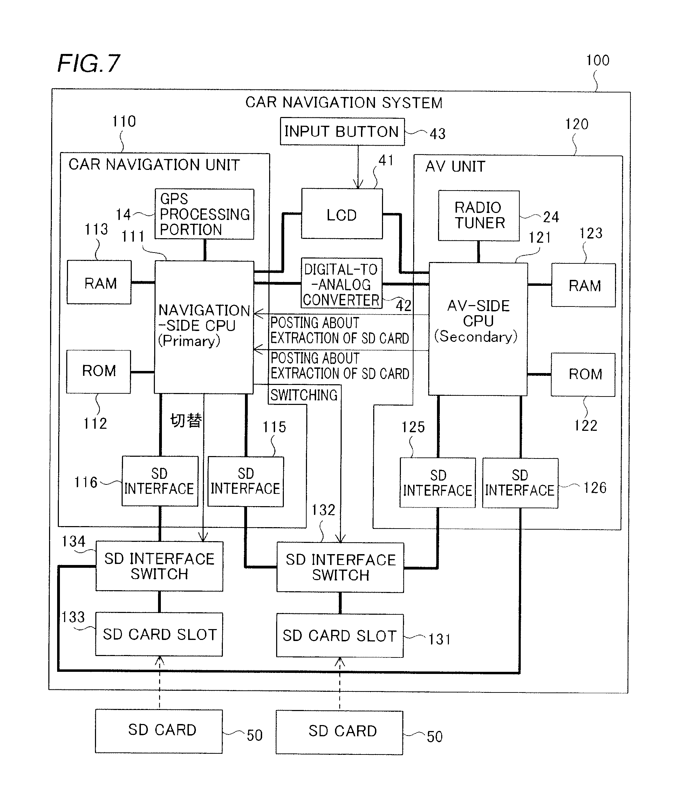

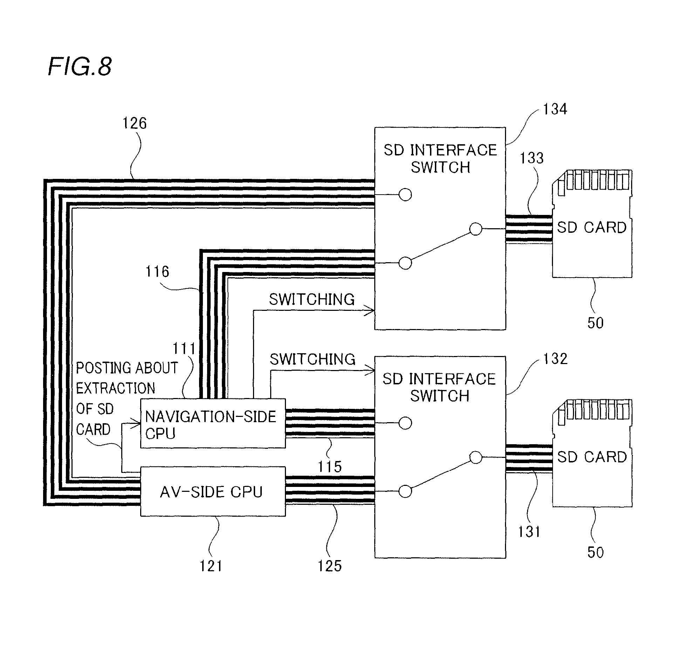

The structure of a car navigation system 100 according to a second embodiment of the present invention is now described with reference to Figs. 7 and 8. According to the second embodiment, the car navigation system 100 is provided with two SD card slots 131 and 133 connectable with SD cards 50, dissimilarly to the aforementioned first embodiment.

As shown in Fig. 7, the car navigation system 100 according to the second embodiment of the present invention includes a car navigation unit 110 mainly conducting program processing for showing the user the shortest route to his/her destination and an AV unit 120 mainly conducting program processing related to an AV function. The car navigation system 100 is an example of the "switching control system" in the present invention. According to the second embodiment, the car navigation system 100 further includes the SD card slots 131 and 133 capable of reading the SD cards 50, an SD interface switch 132 capable of switching connection between the SD card slot 131 and either the car navigation unit 110 or the AV unit 120, another SD interface switch 134 capable of switching connection between the SD card slot 133 and either the car navigation unit 110 or the AV unit 120, a liquid crystal display (LCD) portion 41, a digital-to-analog converter 42 and an input button 43. The SD card slot 131 is an example of the "portable storage medium connection portion" or the "first portable storage medium connection portion" in the present invention, and the SD card slot 133 is an example of the "portable storage medium connection portion" or the "second portable storage medium connection portion" in the present invention. The SD interface switch 132 is an example of the "switching portion" or the "first switching portion" in the present invention, and the SD interface switch 134 is an example of the "switching portion" or the "second switching portion" in the present invention.

The car navigation unit 110 of the car navigation system 100 includes a navigation-side CPU 111 controlling the car navigation unit 110, a ROM 112 and a RAM 113 connected to the navigation-side CPU 111, a GPS processing portion 14 for finding the position of the car navigation system 100, an SD interface 115 connecting the navigation-side CPU 111 and the SD interface switch 132 with each other and another SD interface 116 connecting the navigation-side CPU 111 and the SD interface switch 134 with each other. The navigation-side CPU 111 is an example of the "first control portion" in the present invention.

The AV unit 120 of the car navigation system 100 includes an AV-side CPU 121 controlling the AV unit 120 which is a system other than the car navigation unit 110, a ROM 122 and a RAM 123 connected to the AV-side CPU 121, a radio tuner 24 acquiring radiobroadcasting data, an SD interface 125 connecting the AV-side CPU 121 and the SD interface switch 132 with each other and another SD interface 126 connecting the AV-side CPU 121 and the SD interface switch 134 with each other. The AV-side CPU 121 is an example of the "second control portion" in the present invention.

The SD card slots 131 and 133 are so formed that the SD cards 50 are insertable thereinto, and formed to be capable of reading data stored in the SD cards 50 when the same are inserted thereinto.

The SD interface switch 132 is formed to be selectively (alternatively) switchable to the SD interface 115 of the car navigation unit 110 and the SD interface 125 of the AV unit 120. More specifically, the SD interface switch 132 is connected with both of the SD interface 115 of the car navigation unit 110 and the SD interface 125 of the AV unit 120, and formed to selectively switch/connect the SD card slot 131 to either the SD interface 115 or the SD interface 125. The SD interface switch 134 is formed to be selectively (alternatively) switchable to the SD interface 116 of the car navigation unit 110 and the SD interface 126 of the AV unit 120. More specifically, the SD interface switch 134 is connected with both of the SD interface 116 of the car navigation unit 110 and the SD interface 126 of the AV unit 120, and formed to selectively switch/connect the SD card slot 133 to either the SD interface 116 or the SD interface 126. Further, the SD interface switch 132 is formed to switch the SD card slot 131 to either the SD interface 115 or the SD interface 125 only when receiving a switching instruction from the navigation-side CPU 111 of the car navigation unit 110. The SD interface switch 134 is formed to switch the SD card slot 133 to either the SD interface 116 or the SD interface 126 only when receiving a switching instruction from the navigation-side CPU 111 of the car navigation unit 110.

According to the second embodiment, the navigation-side CPU 111 is formed to be connectable with the SD card slot 131 through the SD interface 115 and the SD interface switch 132. Further, the navigation-side CPU 111 is formed to be connectable with the SD card slot 133 through the SD interface 116 and the SD interface switch 134. In addition, the navigation-side CPU 111 is formed to control the SD interface switch 132 to be connected to the SD interface 115 in preference to the SD interface 125 when the corresponding SD card 50 is connected to the SD card slot 131 and to control the SD interface switch 134 to be connected to the SD interface 116 in preference to the SD interface 126 when the corresponding SD card 50 is connected to the SD card slot 133. Further, the navigation-side CPU 111 is formed to control the SD interface switch 132 to switch the connection target of the SD card slot 131 to the AV-side CPU 121 of the AV unit 120 in response to the contents of the data stored in the corresponding SD card 50.

More specifically, the navigation-side CPU 111 is formed to determine whether or not the data stored in the SD card 50 connected to the SD card slot 131 includes data (update data (map update data and destination/route information) for a program stored in the ROM 112 etc.) processable with the navigation-side CPU 111 according to the second embodiment. Further, the navigation-side CPU 111 is formed to process the processable data when the data stored in the SD card 50 includes the data (update data (map update data and destination/route information) etc.) processable with the navigation-side CPU 111. In addition, the navigation-side CPU 111 is formed to control the SD interface switch 132 to switch the SD card slot 131 from a state connected with the SD interface 115 to a state connected with the SD interface 125 when the data stored in the SD card 50 includes no data (update data etc.) processable with the navigation-side CPU 111.

According to the second embodiment, the navigation-side CPU 111 is formed to control the SD interface switch 134 to switch the connection target of the SD card slot 133 to the AV-side CPU 121 of the AV unit 120 in response to the contents of the data stored in the corresponding SD card 50.

More specifically, the navigation-side CPU 111 is formed to determine whether or not the data stored in the SD card 50 connected to the SD card slot 133 includes data (update data (map update data and destination/route information) for the program stored in the ROM 112 etc.) processable with the navigation-side CPU 111 according to the second embodiment. Further, the navigation-side CPU 111 is formed to process the processable data when the data stored in the SD card 50 includes the data (update data (map update data and destination/route information) etc.) processable with the navigation-side CPU 111. In addition, the navigation-side CPU 111 is formed to control the SD interface switch 134 to switch the SD card slot 133 from a state connected with the SD interface 116 to a state connected with the SD interface 126 when the data stored in the SD card 50 includes no data (update data etc.) processable with the navigation-side CPU 111.

According to the second embodiment, the AV-side CPU 121 is formed to be connectable with the SD card slot 131 through the SD interface 125 and the SD interface switch 132. Further, the AV-side CPU 121 is formed to be connectable with the SD card slot 133 through the SD interface 126 and the SD interface switch 134. In addition, the AV-side CPU 121 is formed to post the navigation-side CPU 111 of the car navigation unit 110 about cancellation of the connection with the SD card 50 when the connection between the SD card slot 131 and the SD card 50 is canceled, as shown in Fig. 8. Further, the AV-side CPU 121 is formed to post the navigation-side CPU 111 of the car navigation unit 110 about cancellation of the connection with the SD card 50 when the connection between the SD card slot 133 and the SD card 50 is canceled.

According to the second embodiment, as hereinabove described, the car navigation unit 100 is provided with the two SD card slots 131 and 132 and the two SD interface switches 132 and 134, controls the SD interface switch 132 to switch the connection target of the SD card slot 131 from the navigation-side CPU 111 to the AV-side CPU 121 and controls the SD interface switch 134 to switch the connection target of the SD card slot 133 from the navigation-side CPU 111 to the AV-side CPU 121. According to this structure, the car navigation system 100 can automatically switch the connection target of the SD card slot 131 or 133 from the navigation-side CPU 111 to the AV-side CPU 121, to whichever one of the SD card slots 131 and 133 the corresponding SD card 50 is connected. Therefore, the user's convenience can be improved when switching the connection target of the SD card slot 131 or 133.

The remaining structure and effects of the second embodiment are similar to those of the aforementioned first embodiment.

### (Third Embodiment)

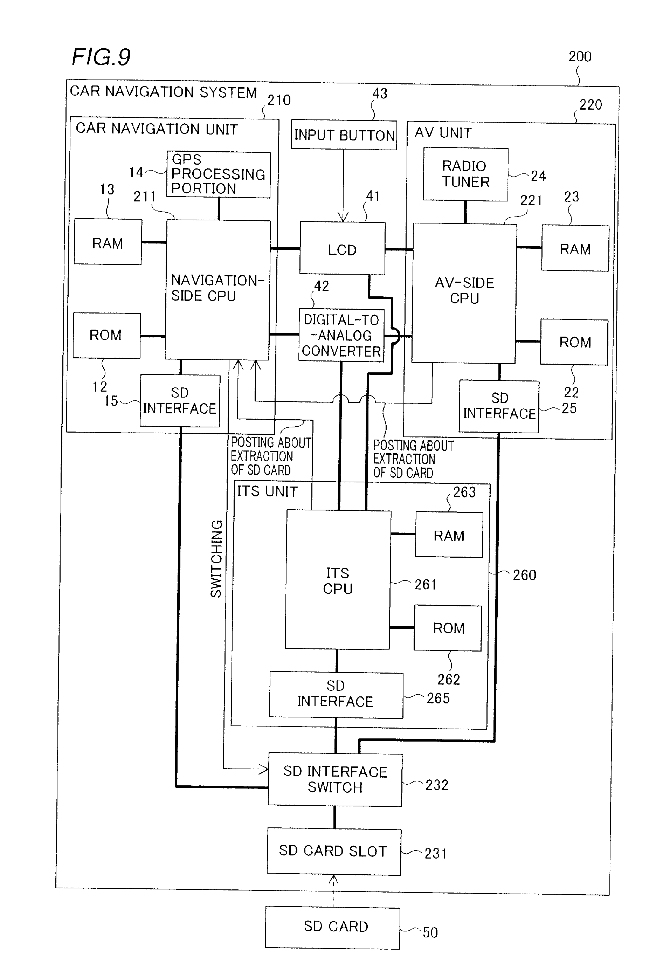

The structure of a car navigation system 200 according to a third embodiment of the present invention is now described with reference to Figs. 9 to 11. According to the third embodiment, the car navigation system 200 is provided with an ITS (intelligent transport systems) unit 260 acquiring road traffic information etc. in addition to a car navigation unit 210 and an AV unit 220, dissimilarly to the aforementioned first and second embodiments.

As shown in Fig. 9, the car navigation system 200 according to the third embodiment of the present invention includes the car navigation unit 210 mainly conducting program processing for showing the user the shortest route to his/her destination, the AV unit 220 mainly conducting program processing related to an AV function and the ITS unit 260 mainly conducting program processing related to acquisition of the road traffic information. The car navigation system 200 is an example of the "switching control system" in the present invention. The car navigation system 200 further includes an SD card slot 231 capable of reading an SD card 50, an SD interface switch 232 capable of switching the connection target of the SD card slot 231 to any of the car navigation unit 210, the AV unit 220 and the ITS unit 260, a liquid crystal display (LCD) portion 41, a digital-to-analog converter 42 and an input button 43. The SD card slot 231 is an example of the "portable storage medium connection portion" in the present invention, and the SD interface switch 232 is an example of the "switching portion" in the present invention.

According to the third embodiment, the ITS unit 260 includes an ITS-CPU 261 controlling the ITS unit 260, a ROM 262 and a RAM 263 connected to the ITS-CPU 261 and an SD interface 265 connecting the ITS-CPU 261 and the SD interface switch 232 with each other. The ITS-CPU 261 is an example of the "third control portion" in the present invention.

The SD card slot 231 is so formed that an SD card 50 is insertable thereinto, and formed to be capable of reading data stored in the SD card 50 when the same is inserted thereinto.

The SD interface switch 232 is formed to be selectively (alternatively) switchable to an SD interface 15 of the car navigation unit 210, an SD interface 25 of the AV unit 220 and the SD interface 265 of the ITS unit 260. Thus, the SD interface switch 232 can selectively switch/connect the SD card slot 231 to any of a navigation-side CPU 211 of the car navigation unit 210, an AV-side CPU 221 of the AV unit 220 and the ITS-CPU 261 of the ITS unit 260. When the SD interface switch 232 connects the SD card slot 231 and the SD interface 25 with each other, the AV-side CPU 221 of the AV unit 220 is connected with the SD card slot 231 through the SD interface 25 and the SD interface switch 232. When the SD interface switch 232 connects the SD card slot 231 and the SD interface 265 with each other, on the other hand, the ITS-CPU 261 of the ITS unit 260 is connected with the SD card slot 231 through the SD interface 265 and the SD interface switch 232. The SD interface switch 232 is formed to switch the SD card slot 231 to any of the SD interfaces 15, 25 and 265 only when receiving a switching instruction from the navigation-side CPU 211 of the car navigation unit 210.

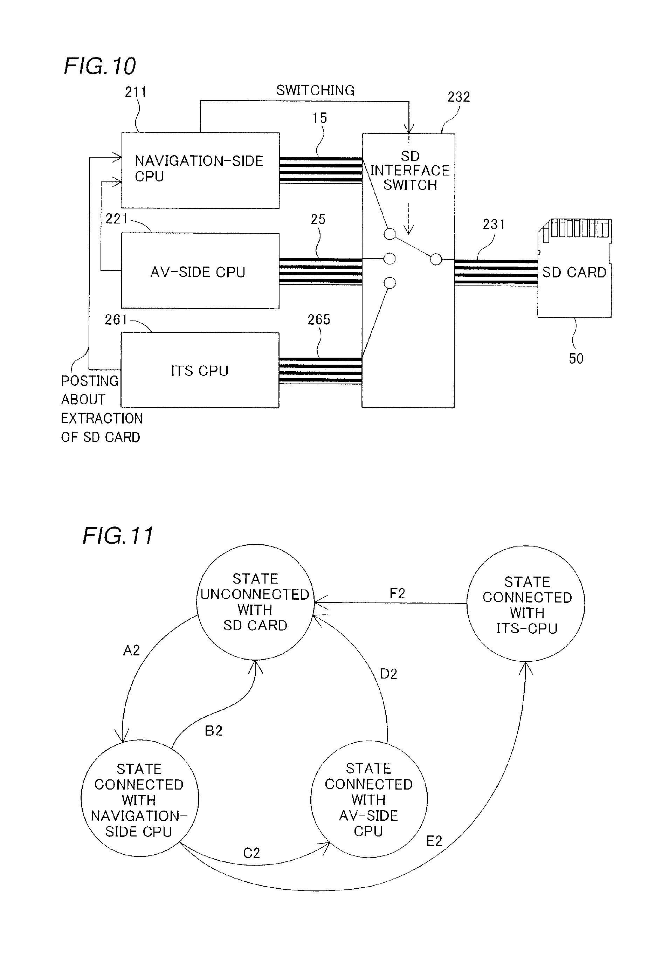

According to the third embodiment, the navigation-side CPU 211 of the car navigation unit 210 of the car navigation system 200 is formed to be connectable with the SD card slot 231 through the SD interface 15 and the SD interface switch 232. Further, the navigation-side CPU 211 is formed to control the SD interface switch 232 to connect the SD card slot 231 to the SD interface 15 in preference to the SD interfaces 25 and 265 when the SD card 50 is connected to the SD card slot 231. When the SD card 50 is connected to the SD card slot 231, therefore, the navigation-side CPU 211 is connected with the SD card slot 231. In this case, the SD card slot 231 is shifted from a state unconnected with the SD card 50 to a state connected with the navigation-side CPU 211, as shown in Fig. 11 (see A2). In addition, the navigation-side CPU 211 is formed to control the SD interface switch 232 to switch the connection target of the SD card slot 231 from the navigation-side CPU 211 to the AV-side CPU 221 of the AV unit 220 in response to the contents of the data stored in the SD card 50. The navigation-side CPU 211 is an example of the "first control portion" in the present invention.

More specifically, the navigation-side CPU 211 is formed to determine whether or not the data stored in the SD card 50 connected to the SD card slot 231 includes data (update data (map update data and destination/route information) for a program etc.) processable with the navigation-side CPU 211 according to the third embodiment. Further, the navigation-side CPU 211 is formed to process the processable data in the state where the SD card slot 231 is connected with the navigation-side CPU 221 shown in Fig. 11 when the data stored in the SD card 50 includes the data (update data (map update data and destination/route information) etc.) processable with the navigation-side CPU 211.

In addition, the navigation-side CPU 211 is formed to determine whether or not the SD card 50 includes AV data (compressed music data and compressed image data) processable with the AV-side CPU 221 or ITS data (update data for the road traffic information etc.) processable with the ITS-CPU 261 when the data stored in the SD card 50 includes no data (update data etc.) processable with the navigation-side CPU 211. Further, the navigation-side CPU 211 is formed to control the SD interface switch 232

to switch the connection target of the SD card slot 231 from the navigation-side CPU 221 to the AV-side CPU 220 when determining that the data stored in the SD card 50 includes the AV data (compressed music data and compressed image data) processable with the AV-side CPU 221. Thus, the SD card slot 231 is shifted from the state connected with the navigation-side CPU 211 to a state connected with the AV-side CPU 221, as shown in Fig. 11 (see C2). Further, the navigation-side CPU 211 is formed to control the SD interface switch 232 to switch the connection target of the SD card slot 231 from the navigation-side CPU 211 to the ITS-CPU 261 of the ITS unit 260 when determining that the data stored in the SD card 50 includes the ITS data (update data for the road traffic information etc.)

processable with the ITS-CPU 261. Thus, the SD card slot 231 is shifted from the state connected with the navigation-side CPU 221 to a state connected with the ITS-CPU 261, as shown in Fig. 11 (see E2).

The navigation-side CPU 211 is formed to shift the SD card slot 231 from the state connected with the navigation-side CPU 221 to the state unconnected with the SD card 50 when the connection between the SD card slot 231 and the SD card 50 is canceled, as shown in Fig. 11 (see B2).

The AV-side CPU 221 is formed to post the navigation-side CPU 211 of the car navigation unit 210 about cancellation of the connection with the SD card 50 when the connection between the SD card slot 231 and the SD card 50 has been canceled in the state where the SD card slot 231 is connected with the AV-side CPU 221 (see Fig. 11), as shown in Fig. 10. The SD card slot 231 is shifted from the state connected with the AV-side CPU 221 to the state unconnected with the SD card 50 on the basis of the posting from the AV-side CPU 221, as shown in Fig. 11 (see D2). The AV-side CPU 221 is an example of the "second control portion" in the present invention.

The ITS-CPU 261 is formed to post the navigation-side CPU 211 of the car navigation unit 210 about cancellation of the connection with the SD card 50 when the connection between the SD card slot 231 and the SD card 50 is canceled. Thus, the SD card slot 231 is shifted from the state connected with the ITS-CPU 261 to the state unconnected with the SD card 50, as shown in Fig. 11 (see F2) .

According to the third embodiment, as hereinabove described, the car navigation system 200 is formed to be capable of switching/connecting the SD card slot 231 to the three CPUs (control portions), i.e., the navigation-side CPU 211, the AV-side CPU 221 and the ITS-CPU 261, whereby the same can properly process the data, whichever one of the data processable with the navigation-side CPU 211, the data processable with the AV-side CPU 221 and the data processable with the ITS-CPU 261 the SD card 50 stores.

The remaining structure and effects of the third embodiment are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while the present invention is applied to the car navigation system as an example of the inventive switching control system in each of the aforementioned first to third embodiments, the present invention is not restricted to this. The present invention may alternatively be applied to another switching control system, such as a car audio system, a television set or a portable telephone, for example, other than the car navigation system, so far as the same is a switching control system.

While the SD card is employed as an example of the portable storage medium in each of the aforementioned first to third embodiments, the present invention is not restricted to this. The present invention may alternatively be applied to a system employing another portable storage medium, such as a multimedia card (MMC) or a USB memory, for example, other than the SD card, so far as the same is a portable storage medium.

While the navigation-side CPU is formed to determine whether or not the SD card has been extracted after terminating processing of the processable data stored in the SD card when the data stored in the SD card includes the data (map update date and destination/route information) processable with the navigation-side CPU in each of the aforementioned first to third embodiments, the present invention is not restricted to this. According to the present invention, the navigation-side CPU may alternatively be formed to connect/switch the SD interface switch from the navigation-side CPU to the AV-side CPU or the ITS-CPU after terminating processing of the data (map update date and destination/route information), included in the SD card, processable with the navigation-side CPU. In this case, the data stored in the SD card must include the AV data (compressed music data and compressed image data) or the ITS data (update data for the road traffic information etc.).

While the navigation-side CPU controls the car navigation unit and the AV-side CPU controls the AV unit so that one CPU controls each of the car navigation unit and the AV unit in each of the aforementioned first and second embodiments, the present invention is not restricted to this. According to the present invention, one CPU including a plurality of processor cores (e.g., two processor cores) may alternatively control the car navigation unit and the AV unit. In other words, the first and second processor cores may control the car navigation unit and the AV unit respectively. In this case, the first processor core is an example of the "first control portion" in the present invention, and the second processor core is an example of the "second control portion". The term "processor core" denotes the nucleus of a CPU mounted with a logic circuit for arithmetic processing etc.

While the navigation-side CPU controls the car navigation unit, the AV-side CPU controls the AV unit and the ITS-CPU controls the ITS unit so that one CPU controls each of the car navigation unit, the AV unit and the ITS unit in the aforementioned third embodiment, the present invention is not restricted to this. According to the present invention, one CPU including a plurality of processor cores (e.g., three processor cores) may alternatively control the car navigation unit, the AV unit and the ITS unit. In other words, the first, second and third processor cores may control the car navigation unit, the AV unit and the ITS unit respectively. In this case, the first processor core is an example of the "first control portion" in the present invention, and the second and third processor cores are examples of the "second control portion" in the present invention.

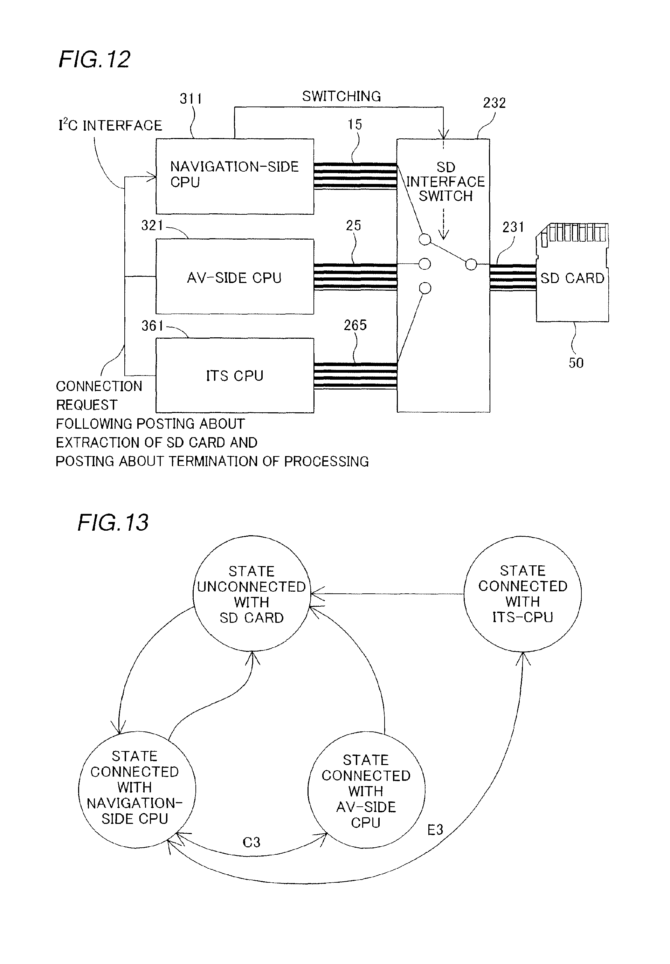

While the navigation-side CPU determines whether or not the data stored in the SD card includes the data processable with the navigation-side CPU, the data processable with the AV-side CPU or the data processable with the ITS-CPU in the aforementioned third embodiment, the present invention is not restricted to this. As understood from a modification of the third embodiment shown in Figs. 12 and 13, a navigation-side CPU 311 may connect an SD card slot 231 with the navigation-side CPU 311, an AV-side CPU 321 or an ITS-CPU 361 in response to a switching control request from the AV-side CPU 321 or the ITS-CPU 361, without determining whether or not data stored in an SD card 50 includes data processable with the navigation-side CPU 311, data processable with the AV-side CPU 321 or data processable with the ITS-CPU 361.

More specifically, an interactively communicable I²C interface interconnects the navigation-side CPU 311, the AV-side CPU 321 and the ITS-CPU 361 with each other in the aforementioned modification, as shown in Fig. 12. Thus, the navigation-side CPU 311, the AV-side CPU 321 and the ITS-CPU 361 can communicate with each other. Consequently, the AV-side CPU 321 can request the navigation-side CPU 311 to cancel connection and to switch the connection for shifting an SD card slot to a state connected with the navigation-side CPU 311 (see Fig. 13) when the SD card slot is in a state connected with the ITS-CPU 361 (see Fig. 13), for example. In this case, the SD card slot can be shifted from the state connected with the AV-side CPU 321 to the state connected with the navigation-side CPU 311 as shown in Fig. 13 (see C3), dissimilarly to the aforementioned third embodiment capable of shifting the SD card slot 231 from the state connected with the navigation-side CPU 211 only to the state connected with the AV-side CPU 221. Also when the SD card slot is in the state connected with the ITS-CPU 361 (see Fig. 13), for example, the ITS-CPU 361 can request the navigation-side CPU 311 to cancel the connection and to shift the SD card slot to the state connected with the navigation-side CPU 311 (see Fig. 13), whereby the SD card slot can be shifted between the state connected with the navigation-side CPU 311 and the state connected with the AV-side CPU 321. In this case, the SD card slot can be shifted from the state connected with the ITS-CPU 361 to the state connected with the navigation-side CPU 311 (see E3 in Fig. 13), dissimilarly to the aforementioned third embodiment capable of shifting the SD card slot 231 from the state connected with the navigation-side CPU 211 only to the state connected with the ITS-CPU 261. The navigation-side CPU 311 is an example of the "first control portion" in the present invention, and the AV-side CPU 321 and the ITS-CPU 361 are examples of the "second control portion" and the "third control portion" in the present invention respectively.

According to the modification of the third embodiment, as hereinabove described, the car navigation system can freely switch the connection target of the SD interface switch 232 following the processing state of the navigation-side CPU 311, the AV-side CPU 321 or the ITS-CPU 361, dissimilarly to the car navigation system 200 according to the aforementioned third embodiment. While the SD card slot 231 cannot return to the state connected with the navigation-side CPU 211 unless the SD card 50 is extracted when the same is shifted from the state connected with the navigation-side CPU 211 to the state connected with the AV-side CPU 221 in the third embodiment, for example, the SD card slot can be shifted from the state connected with the AV-side CPU 321 to the state connected with the navigation-side CPU 311 without through a state unconnected with the SD card, for example, in the modification of the third embodiment. Further, the SD card slot can be freely shifted between the state connected with the navigation-side CPU 311, the state connected with the AV-side CPU 321, the state connected with the ITS-CPU 361 and the state unconnected with the SD card. Thus, the car navigation system can read and write data with each CPU by immediately switching the state of connection in response to the situation.

## Claims

1. A switching control system (1, 100, 200) comprising:
a portable storage medium connection portion (31, 131, 133, 231), to which a portable storage medium (50) is connected, capable of reading data stored in said portable storage medium;
a first control portion (11, 111, 211, 311) formed to be selectively connectable with said portable storage medium connection portion;
a second control portion (21, 121, 221, 321) formed to be selectively connectable with said portable storage medium connection portion; and
a switching portion (32, 132, 134, 232), controlled by said first control portion, capable of switching said portable storage medium connection portion to be connected with either said first control portion or said second control portion, wherein
said first control portion is formed to control said switching portion so that said first control portion is preferentially connected to said portable storage medium connection portion and to control said switching portion to switch the connection target of said portable storage medium connection portion from said first control portion to said second control portion in response to the contents of said data stored in said portable storage medium when said portable storage medium is connected to said portable storage medium connection portion.

2. The switching control system according to claim 1,
wherein
said first control portion is formed to detect the contents of said data stored in said portable storage medium when said portable storage medium is connected to said portable storage medium connection portion, to process said data stored in said portable storage medium when said data stored in said portable storage medium includes data processable with said first control portion, and to control said switching portion to switch the connection target of said portable storage medium connection portion from said first control portion to said second control portion when said data stored in said portable storage medium includes no data processable with said first control portion or when said first control portion terminates processing of said data stored in said portable storage medium.

3. The switching control system according to claim 2,
wherein
said first control portion is formed to determine whether or not said portable storage medium has been connected to said portable storage medium connection portion and to determine whether or not said data stored in said portable storage medium includes said data processable with said first control portion when determining that said portable storage medium has been connected to said portable storage medium connection portion.

4. The switching control system according to claim 2,
wherein
said second control portion is formed to determine whether or not said data stored in said portable storage medium includes data processable with said second control portion when the connection target of said portable storage medium connection portion is switched from said first control portion to said second control portion and to process said data stored in said portable storage medium when said data stored in said portable storage medium includes said data processable with said second control portion.

5. The switching control system according to claim 4,
wherein
said second control portion is formed to detect said portable storage medium connected to said portable storage medium connection portion when the connection target of said portable storage medium connection portion is switched from said first control portion to said second control portion.

6. The switching control system according to claim 2,
wherein
said second control portion is formed to determine whether or not said data stored in said portable storage medium includes data processable with said second control portion when the connection target of said portable storage medium connection portion is switched from said first control portion to said second control portion and to determine whether or not the user has extracted said portable storage medium from said portable storage medium connection portion when said data stored in said portable storage medium include no data processable with said second control portion.

7. The switching control system according to claim 2, further comprising a third control portion (261, 361) formed to be selectively connectable with said portable storage medium connection portion, wherein
said first control portion is formed to control said switching portion to switch the connection target of said portable storage medium connection portion from said first control portion to said second control portion when said data stored in said portable storage medium includes data processable with said second control portion and to control said switching portion to switch the connection target of said portable storage medium connection portion from said first control portion to said third control portion when said data stored in said portable storage medium includes data processable with said third control portion.

8. The switching control system according to claim 1,
wherein
said second control portion is formed to determine the state of connection between said portable storage medium connection portion and said portable storage medium when said second control portion is connected with said portable storage medium connection portion and to post said first control portion about cancellation of the connection between said portable storage medium connection portion and said portable storage medium when determining that the connection between said portable storage medium connection portion and said portable storage medium has been canceled.

9. The switching control system according to claim 8,
wherein
said first control portion is formed to control said switching portion to connect said portable storage medium connection portion and said first control portion with each other when said second control portion posts said first control portion about cancellation of the connection between said portable storage medium connection portion and said portable storage medium.

10. The switching control system according to claim 1, provided with one said portable storage medium connection portion.

11. The switching control system according to claim 1,
wherein
said portable storage medium connection portion includes a first portable storage medium connection portion (131) and a second portable storage medium connection portion (133) provided separately from said first portable storage medium connection portion, and
said switching portion includes a first switching portion (132) capable of switching/connecting said first portable storage medium connection portion to either said first control portion or said second control portion and a second switching portion (134) capable of switching/connecting said second portable storage medium connection portion to either said second control portion or said first control portion.

12. The switching control system according to claim 1,
wherein
said first control portion is formed to control a car navigation unit (10, 110, 210) and to be capable of processing update data for said car navigation unit stored in said portable storage medium, and
said second control portion is formed to be capable of processing data for a unit (20, 120, 220, 260) other than said car navigation unit.

13. The switching control system according to claim 12, wherein
said unit other than said car navigation unit includes an audiovisual unit (20, 120, 220) capable of reproducing at least either music or an image, and
said second control portion is formed to be capable of processing at least music data or image data for said audiovisual unit.

14. The switching control system according to claim 1,
wherein
said first control portion is formed to detect said portable storage medium connected to said portable storage medium connection portion when said portable storage medium is connected to said portable storage medium connection portion.

15. The switching control system according to claim 1,
wherein
said first control portion is formed to detect said portable storage medium connected to said portable storage medium connection portion and to check said data stored in detected said portable storage medium when said portable storage medium is connected to said portable storage medium connection portion.
